**Europäisches Patentamt**

**European Patent Office**

**Office européen des brevets**

(19)

(11) Veröffentlichungsnummer : **0 071 838**
**B1**

# EUROPÄISCHE PATENTSCHRIFT

(12)

(45) Veröffentlichungstag der Patentschrift :
30.12.86

(21) Anmeldenummer : 82106663.6

(22) Anmeldetag : 23.07.82

(51) Int. Cl.⁴ : **B 29 D 30/58**

(54) Verfahren und Vorrichtung zur Herstellung von Radialreifen.

(30) Priorität : 05.08.81 DE 3130918

(43) Veröffentlichungstag der Anmeldung :
16.02.83 Patentblatt 83/07

(45) Bekanntmachung des Hinweises auf die Patenterteilung : 30.12.86 Patentblatt 86/52

(84) Benannte Vertragsstaaten :
AT BE DE FR GB IT LU NL SE

(56) Entgegenhaltungen :
DE-A- 2 459 020
DE-B- 1 579 162
DE-B- 2 429 377

(73) Patentinhaber : BAYER AG
Konzernverwaltung RP Patentabteilung
D-5090 Leverkusen 1 Bayerwerk (DE)

(72) Erfinder : Ippen, Jacob, Dr.
Schleiermacherstrasse 17
D-5090 Leverkusen 1 (DE)
Erfinder : Stüttgen, Friedel
Albrecht-Dürer-Strasse 94
D-5024 Pulheim (DE)

**Beschreibung**

Die Erfindung betrifft ein Verfahren zur Herstellung von Radialreifen, bei dem der Zenit einer Karkasse und das Paket aus Gürtel und Lauffächenstreifen, das von einer mit einem Transferring verbundenen Klemmplatte gehalten wird, in Kontakt gebracht werden, um dann mit Hilfe von Expansionsbälgen gegeneinander gepreßt zu werden, sowie eine Vorrichtung zur Durchführung des Verfahrens.

Radialreifen sind aufgebaut aus einer Karkasse mit quer zur Laufrichtung angeordneten verstärkenden Cordfäden, einem Gürtel mit in Laufrichtung angeordneten, verstärkenden Cordfäden und einer Lauffläche über dem Gürtel.

Bei der Herstellung dieser Radialreifen werden üblicherweise die Karkasse und der Gürtel mit dem Lauffächenstreifen zunächst auf getrennten flachen Trommeln gefertigt. Das Zusammenbringen der beiden Reifenbauteile erfolgt i. a. mittels eines Tranferrings, der Gürtel und Lauffächenstreifen von der Gürtelbautrommel aufnimmt und über der Karkasse in Position bringt. Durch Zusammenfahren der Schlitten der Karkassentrommel wird der Durchmesser der Karkasse so weit vergrößert, daß ein Kontakt zwischen Gürtel und Karkasse entsteht. Danach wird durch eine Rolle bei rotierendem Reifen das Paket aus Gürtel und Lauffläche an die Karkasse angerollt und so mit ihr verbunden. Ein Nachteil dieses Verfahrens liegt darin, daß Lufteinschlüsse zwischen Karkasse und Gürtel bzw. Laufflächenende entstehen können. Darüber hinaus führen die Anpreßdrücke vor allem bei großen LKW-Reifen leicht zu einer Deformation der Karkasse und einer Verschiebung der verstärkenden Cordfäden, was sich nachteilig auf die Laufeigenschaften des Reifens auswirkt.

Eine Verbesserung dieses Verfahrens zeigt die DE-A-2 429 377, bei dem die Lauffläche mittels zweier Schläuche über geführte Blechsegmente angedrückt wird. Hierdurch wird zwar eine ungleichmäßige Verformung im unvulkanisierten Reifen verringert, jedoch können mit dieser Vorrichtung Lufteinschlüsse, die bei Erwärmung des Reifens durch Walkarbeit während des Laufes explosionsartig die Ablösung von Bauteilen zur Folge haben können, nicht sicher verhindert werden.

Durch die DE-A-2 459 020 ist ferner ein Transferring bekannt, der auf jeder Seite eines mittigen Ringbalges jeweils einen weiteren Ringbalg besitzt, mit dem die Randbereiche von Lauffläche und Gürtel durch Aufblasen und Strecken der geknickten Seitenwände gegen die bombierte Karkasse gedrückt werden, wobei durch das Strecken der Seitenwände eine Stauchung der Gummilagen erfolgt. Auch bei diesem Verfahren fehlt neben dem Vakuum das Andrücken von innen nach außen.

Aufgabe der Erfindung ist es, beim Verbinden von Lauffächenstreifen, Gürtel und Karkasse unter Vermeidung von Cordverschiebung und Gummistauchungen Einschlüsse von Luft zu verhindern.

Die Aufgabe wurde erfindungsgemäß bei einem Verfahren der eingangs genannten Art dadurch gelöst, daß vor dem Anpressen des Paketes an die Karkasse, das mit Hilfe von Expansions-Anrollbälgen erfolgt, beidseitig an die Karkasse zwei mit dieser dicht abschließende, mit dem Transferring verbundene Gummimanschetten angelegt werden und daß anschließend aus dem dadurch oberhalb der Karkasse gebildeten Hohlraum die Luft evakuiert wird, wodurch die Bildung von Lufteinschlüssen zwischen Karkasse und Gürtel bzw. Laufflächenstreifen verhindert wird.

Durch das erfindungsgemäße Verfahren werden Lufteinschlüsse zwischen Karkasse und Gürtel bzw. Laufflächenstreifen sicher verhindert sowie eine Deformation der Karkasse und eine Verschiebung oder Verzerrung der verstärkenden Cordflächen vermieden.

Ein weiterer Gegenstand der Erfindung ist eine Vorrichtung gemäß dem Oberbegriff des Anspruchs 2 zur Durchführung des Verfahrens, die dadurch gekennzeichnet ist, daß der Transferring mit beidseitig jeweils über eine Halterung mit einer seitlichen, an die Karkasse zur Anlage bringbaren Gummimanschette mit einer Evakuierungsöffnung versehen ist, daß zwischen dem Transferring und dem aus Gürtel und Laufflächenstreifen bestehenden Paket Expansions-Anrollbälge angeordnet sind, mit denen das Paket gegen die ruhende Karkasse preßbar ist, und daß der Transferring im Bereich des Durchtritts der an ihrem Ende jeweils auch einer Mutter und einem Distanzstück versehenen Verbindungsstifte jeweils ein Dichtungselement aufweist.

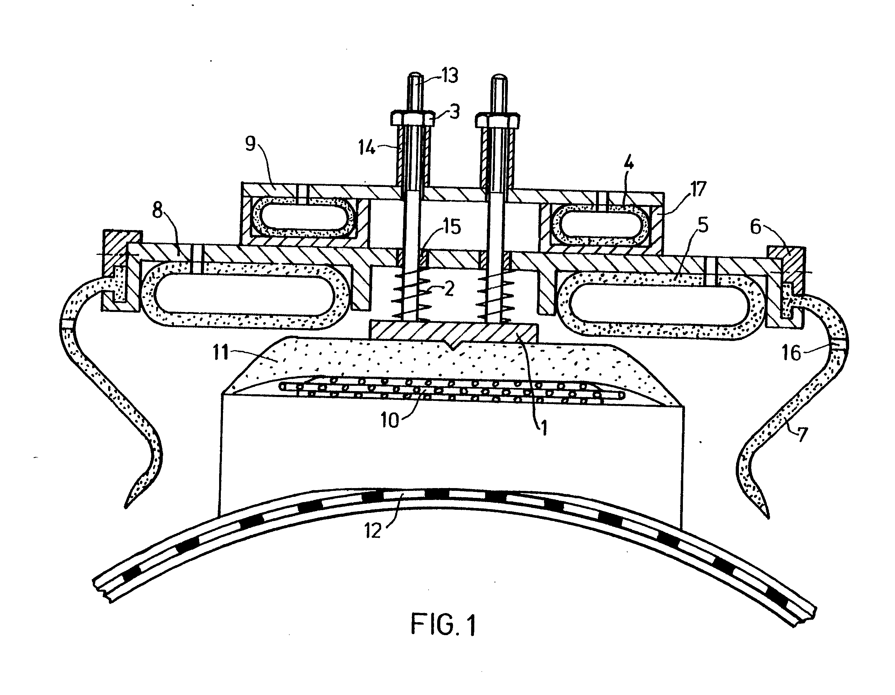

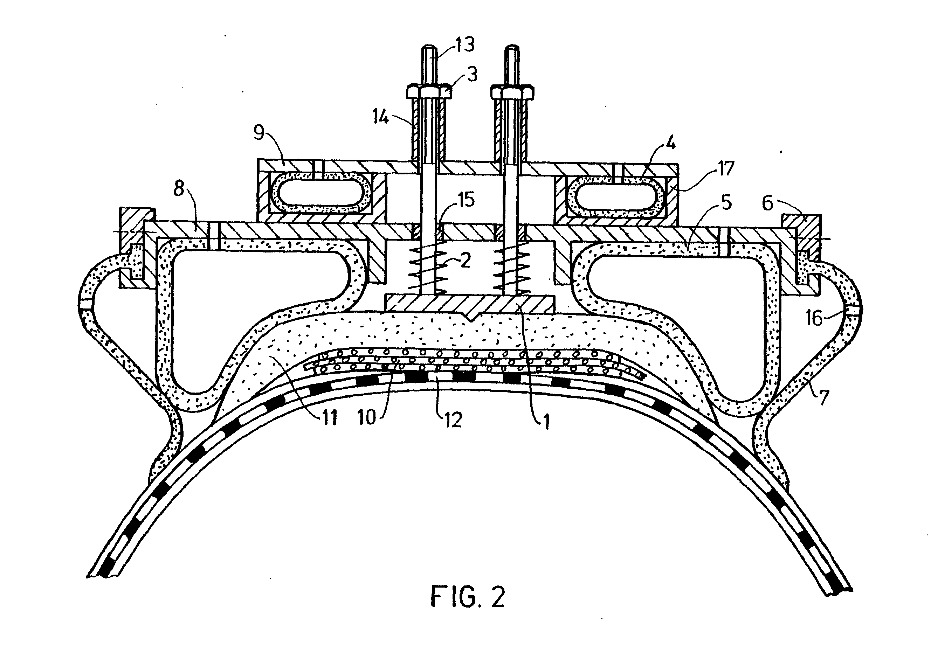

Anhand von Fig. 1 und 2 sei die erfindungsgemäße Herstellung eines Radialreifens beispielhaft erläutert.

Das getrennt hergestellte Paket aus Gürtel 10 und Laufflächenstreifen 11 wird von der mit dem Transferring 8 verbundenen Klemmplatte 1 erfaßt und über der auf einer Bautrommel (nicht dargestellt) ruhenden Karkasse 12 in Position gebracht. Durch Schließen der Bautrommel wird die Karkasse 12 stärker gewölbt und nach oben bewegt, so daß sie in ihrem Zenit mit dem Paket aus Gürtel 10 und Laufflächenstreifen 11 in Kontakt tritt (siehe Fig. 2). Dabei legen sich außerdem beidseitig an die Karkasse die beiden umlaufenden, dicht abschließenden Gummimanschetten 7 an, die über die Halterung 6 mit dem Transferring 8 verbunden sind. Dadurch entsteht ein in sich geschlossener Hohlraum aus Karkasse 12, Gummimanschetten 7 und Transferring 8 einschließlich Dichtungselementen 15, aus dem die Luft über die Öffnungen 16 evakuiert wird. Anschließend werden die Expansions-Anrollbälge 5 expandiert, so daß sie Laufflächenstreifen 11 und Gürtel 10 gegen die Karkasse 12 drücken und fest mit ihr verbinden (vgl. Figur 2). Nach dem Anpreßvorgang werden die Expansions-Anrollbälge 5 evakuiert und gehen wieder in ihre ursprüngliche Lage zurückt. Anschließend wird durch Expansion von Gummibälgen 4 in Gehäusen 17 der Metallteller 9 nach oben bewegt, so daß über Distanzstücke 14, Muttern 3 und Verbindungsstifte 13 die Klemmplatte 1 unter Spannung der Federn 2 in ihre Ausgangslage zurückkehrt. Der grüne Reifen kann danach aus der Vorrichtung entnommen und der Heizpresse zugeführt werden.

Zur Herstellung des Reifens sind die üblichen Kautschuke geeignet wie z. B. Natur-, Styrolbutadien-, Acrylnitrilbutadien-, Polybutadien- und Ethylenpropylen-Terpolymerisatkautschuke.

**Patentansprüche**

1. Verfahren zur Herstellung von Radialreifen, bei dem der Zenit einer Karkasse (12) und das Paket aus Gürtel (10) und Laufflächenstreifen (11), das von einer mit einem Transferring (8) verbundenen Klemmplatte (1) gehalten wird, in Kontakt gebracht werden, um dann mit Hilfe von Expansionsbälgen (5) gegeneinander gepreßt zu werden, dadurch gekennzeichnet, daß vor dem Anpressen des Paketes (10+11) an die Karkasse (12), das mit Hilfe von Expansions-Anrollbälgen (5) erfolgt, beidseitig an die Karkasse (12) zwei mit dieser dicht abschließende, mit dem Transferring (8) verbundene Gummimanschetten (7) angelegt werden, und daß anschließend aus dem dadurch oberhalb der Karkasse (12) gebildeten Hohlraum die Luft evakuiert wird, wodurch die Bildung von Lufteinschlüssen zwischen Karkasse (12) und Gürtel (10) bzw. Laufflächenstreifen (11) verhindert wird.

2. Vorrichtung zur Herstellung von Radialreifen entsprechend dem Verfahren nach Anspruch 1 mit einem Transferring (8), der eine gegen die Wirkung von Federn (2) mittels Verbindungsstifte (13) verschiebbare Klemmplatte (1) aufweist, so wie mit zwischen dem Transferring (8) und einem Metallteller (9) in einem Gehäuse (17) gelagerten Expansionsbälgen (4), dadurch gekennzeichnet, daß der Transferring (8) beidseitig jeweils über eine Halterung (6) mit einer seitlichen, an die Karkasse (12) zur Anlage bringbaren Gummimanschette (7) mit einer Evakuierungsöffnung (16) versehen ist, daß zwischen dem Transferring (8) und dem aus Gürtel (10) und Laufflächenstreifen (11) bestehenden Paket Expansions-Anrollbälge (5) angeordnet sind, mit denen das Paket gegen die ruhende Karkasse (12) preßbar ist, und daß der Transferring (8) im Bereich des Durchtritts der an ihrem Ende jeweils mit einer Mutter (3) und einem Distanzstück (14) versehenen Verbindungsstifte (13) jeweils ein Dichtungselement (15) aufweist.

**Claims**

1. Process for producing radial-ply tyres in which the zenith of a carcass (12) and the package consisting of the belt (10) and the tread strip (11), which package is held by a clamping plate (1) connected to a transfer ring (8), are brought into contact and then pressed against each other with the aid of expanding bellows (5), characterised in that, before the package (10+11) is pressed on to the carcass (12), this being carried out by means of expanding roll-on bellows (5), two rubber collars (7), which are connected to the transfer ring (8) and form a tight seal with the carcass (12), are applied to both sides of the latter, and in that the air is then evacuated from the cavity which is thereby formed above the carcass (12), whereby the formation of air locks between the carcass (12) and the belt (10) or tread strip (11) is prevented.

2. Apparatus for the production of radial-ply tyres according to the process of Claim 1, having a transfer ring (8), which has a clamping plate (1) which can be moved counter to the effect of springs (2) by means of connecting pins (13), and having expanding bellows (4) located in a housing (17) between the transfer ring (8) and a metal plate (9), characterised in that the transfer ring (8) is provided on each side, in each case via a holding device (6), with a lateral rubber collar (7), having an evacuation opening (16), which can be moved to lie against the carcass (12), in that expansion roll-on bellows (5) are arranged between the transfer ring (8) and the package consisting of the belt (10) and the tread strip (11), by means of which bellows the package can be pressed against the stationary carcass (12), and in that the transfer ring (8) has one sealing element (15) in the region of penetration of each of the connecting pins (13), the end of each of which is provided with a nut (3) and a spacer (14).

**Revendications**

1. Procédé pour la fabrication de pneus à carcasse radiale, dans lequel on met en contact le sommet d'une carcasse (12) et le paquet constitué d'une ceinture (10) et de bandes de la surface de roulement (11) maintenu par une plaque de bridage (1) reliée à une couronne de transfert (8) pour les presser à l'aide de coussins gonflables (5), caractérisé en ce qu'avant de presser le paquet (10+11) contre la carcasse (12), ce qui se fait à l'aide de coussins gonflables (5), on applique des deux côtés contre la carcasse (12) deux manchettes de caoutchouc (7) reliées à la couronne de transfert (8) et isolant de façon étanche la carcasse ; et en ce qu'ensuite on évacue l'air hors du volume creux ainsi formé au-dessus de la carcasse (12), ce qui interdit la formation d'inclusions d'air entre la carcasse (12) et la ceinture (10) ou les bandes de la surface de roulement (11).

2. Dispositif pour la fabrication de pneus à structure radiale correspondant au procédé de la revendication 1 avec une couronne de transfert (8) qui présente une plaque de bridage (1) qui peut coulisser au moyen de tiges de liaison (13) en agissant contre l'action de ressorts (2), ainsi qu'avec des coussins gonflables (4) placés entre la couronne de transfert (8) et un plateau métallique (9) dans un carter (17), caractérisé en ce que la couronne de transfert (8) est munie, des deux côtés, respectivement par l'intermédiaire d'un support (6), d'une manchette de caoutchouc latérale (7) que l'on peut appliquer contre la carcasse (12) et qui comporte une ouverture d'évacuation (16) ; en ce qu'entre la couronne de transfert (8) et le paquet constitué de la ceinture (10) et des bandes de la surface de roulement (11) sont disposés des coussins gonflables avec lesquels on peut presser le paquet contre la carcasse immobile (12) ; et en ce que dans la zone des tiges de liaison (13) respectivement munies à leur extrémité d'un écrou (3) et d'un écarteur (14), la couronne de transfert (8) présente respectivement un élément d'étanchéité (15).

FIG.1

FIG. 2